# EUROPÄISCHE PATENTSCHRIFT

(11) **EP 3 572 245 B1**
(45) Veröffentlichungstag und Bekanntmachung des Hinweises auf die Patenterteilung: **30.11.2022**
(21) Anmeldenummer: 19169167.4
(22) Anmeldetag: 15.04.2019
(51) Int. Cl.: B60C 11/24

(54) **FAHRZEUGREIFEN**
VEHICLE TIRE
PNEUMATIQUE DE VÉHICULE

(30) Priorität: 23.05.2018 DE 102018208107
(43) Veröffentlichungstag der Anmeldung: 27.11.2019
(73) Patentinhaber: Continental Reifen Deutschland GmbH, 30165 Hannover (DE)
(72) Erfinder: Kendziorra, Norbert, 30165 Hannover (DE); Busche, Joachim, 30165 Hannover (DE); Kurz, Martin, 30165 Hannover (DE)
(74) Vertreter: Continental Corporation

(56) Entgegenhaltungen:
- WO-A1-2010/142054
- DE-A1-102014 226 783
- DE-A1-102015 117 024

## Beschreibung

Die Erfindung betrifft einen Fahrzeugreifen.

Es ist bekannt, bei Fahrzeugreifen eine Reifendrucküberwachung einzusetzen, um einen Druckverlust sicher zu detektieren.

Außerdem gibt es unterschiedliche Ansätze, die Profiltiefe eines Fahrzeugreifens mit einem Reifensensor zu ermitteln. Die meisten bisherigen Konzepte wurden jedoch nicht umgesetzt, da sie unterschiedliche Nachteile besitzen. Einer der Nachteile besteht insbesondere darin, dass es schwierig ist entsprechende Sensoren im Laufstreifen anzuordnen.

Die DE 10 2015 117024 A1, DE 10 2014 226783 A1 und WO 2010/142054 A1 offenbaren bekannte Vorrichtungen und Fahrzeugreifen, mit denen der Profilabrieb überwacht werden kann.

Der Erfindung lag die Aufgabe zugrunde, einen Fahrzeugreifen bereitzustellen, mit dem herkömmliche Fahrzeugreifen verbessert werden können.

Gelöst wird die Aufgabe durch Anspruch1.

Ein Vorteil der Erfindung ist insbesondere darin zu sehen, dass mit dem neuen Reifensensor der Profilabrieb im Fahrzeugreifen auf einfache Weise, automatisiert und mit einer hohen Genauigkeit ermittelt werden kann.

Die Ultraschallvorrichtung ist auf der Reifeninnenseite angeordnet und kann die Profiltiefe des Laufstreifens auf einfache Weise erfassen.

Die Ultraschallvorrichtung sendet eine Vielzahl von Ultraschallwellen durch eine Vielzahl von Reifenbauteilen in Richtung von einzelnen Profilblöcken im Laufstreifen.

Über eine entsprechende Laufzeitmessung der reflektierten Ultraschallwellen lässt sich die Profiltiefe im Laufstreifen ermitteln.

Ein wesentlicher Vorteil gegenüber herkömmlichen Systemen besteht darin, dass kein elektronischer Sensor im Laufstreifen angeordnet ist, der zudem mit Strom versorgt werden müsste.

Die Ultraschallvorrichtung wird nach der Herstellung des Fahrzeugreifens beispielsweise über einen Klebeprozess auf der Reifeninnenseite befestigt. Dadurch ist es ebenfalls nicht notwendig, einen Sensor während des Reifenbauprozesses zwischen Reifenbauteilen zu positionieren.

In einer vorteilhaften Weiterbildung der Erfindung ist vorgesehen, dass die Ultraschall-Vorrichtung einen Piezoaktuator als Ultraschallgeber zum Senden von Ultraschallwellen umfasst.

Mit Piezoaktuatoren lässt sich die Profiltiefe mit einer relativ hohen Genauigkeit bestimmen.

In einer weiteren vorteilhaften Weiterbildung der Erfindung ist vorgesehen, dass die Ultraschall-Vorrichtung einen kombinierten Ultraschallgeber und Ultraschallempfänger zum Empfangen der reflektierten Ultraschallwellen umfasst.

Dadurch sind beide Bauteile in einem platzsparenden Bauteil integriert.

Es ist vorgesehen, dass der Ultraschallgeber kurze Wellenpakete mit 5 bis 10 Schwingungen sendet.

Mit diesen Wellenpaketen lässt sich die Profiltiefe mit einer hohen Genauigkeit bestimmen.

In einer weiteren vorteilhaften Weiterbildung der Erfindung ist vorgesehen, dass der Ultraschallgeber in einem Frequenzbereich von 1 - 20 MHz sendet.

Mit diesem Frequenzbereich lässt sich die Profiltiefe mit einer hohen Genauigkeit bestimmen.

In einer weiteren vorteilhaften Weiterbildung der Erfindung ist vorgesehen, dass die Ultraschall-Vorrichtung mit einem Reifenmodul zur Überwachung eines Reifendruckes gekoppelt ist.

Dadurch können die Messdaten von der Ultraschallvorrichtung direkt mit einer Auswerteeinheit im Reifenmodul verarbeitet und weitergeleitet werden.

In einer weiteren vorteilhaften Weiterbildung der Erfindung ist vorgesehen, dass die Steuerung der Ultraschall-Vorrichtung mit dem Reifenmodul erfolgt.

Dadurch ist es nicht erforderlich, die Ultraschallvorrichtung mit einer eigenen Steuerung-und Regelungsvorrichtung zu bestücken.

In einer weiteren vorteilhaften Weiterbildung der Erfindung ist vorgesehen, dass die Weiterleitung und/oder Auswertung der Messdaten der Ultraschall-Vorrichtung mit dem Reifenmodul und über eine Funkverbindung zu einer zentralen Einheit in einem Fahrzeug erfolgt.

Dadurch erfolgt eine einfache und sichere Datenübertragung zu einer Auswerteeinheit im Fahrzeug.

In einer weiteren vorteilhaften Weiterbildung der Erfindung ist vorgesehen, dass auf der Reifeninnenseite eine Vielzahl von Ultraschall-Vorrichtungen an unterschiedlichen Positionen unterhalb des Laufstreifens angeordnet sind.

Dadurch lässt sich auf einfache Weise die Profiltiefe an unterschiedlichen Stellen im Laufstreifen erfassen und überwachen.

In einer weiteren vorteilhaften Weiterbildung der Erfindung ist vorgesehen, dass die Ultraschall-Vorrichtungen bei einem Neureifen eine Kalibrierung durchführt, um nachfolgend die relative Profiltiefe des Fahrzeugreifens erfassen zu können.
uf diese Weise kann der Profilabrieb des Laufstreifens erfasst und überwacht werden.

Anhand eines Ausführungsbeispiels wird die Erfindung im Folgenden näher beschrieben.

Es zeigt:

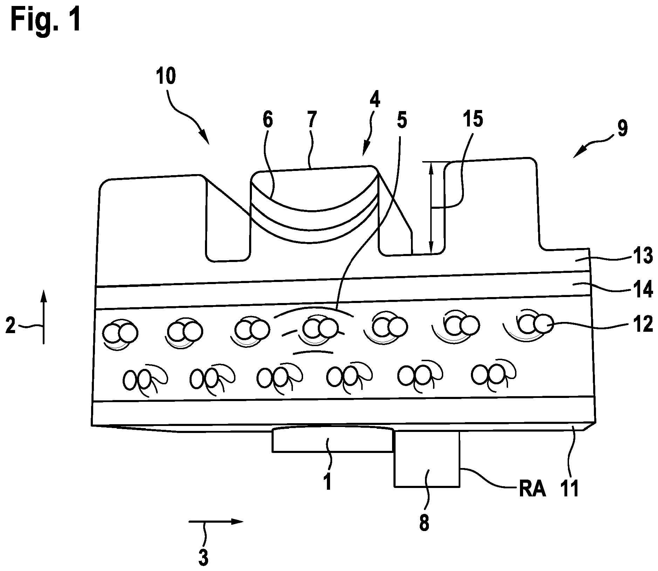

Fig. 1: einen Reifenabschnitt in einer Radialschnittansicht

Die Figur 1 zeigt schematisch einen Reifenabschnitt mit dem Laufstreifen 9 und der Reifeninnenseite 11 in einer Radialschnittansicht.

Die Ultraschallvorrichtung 1, die insbesondere als Piezoaktuator ausgebildet ist, ist auf der Reifeninnenseite 11 des Fahrzeugsreifens angeordnet.

Der Laufstreifen 9 umfasst eine Vielzahl von Profilblöcken 4 bzw. Profilklötzen. Zwischen den Profilblöcken 4 sind im Normalfall Umfangsrillen 10 angeordnet, wobei die Tiefe der Umfangsrillen 10 die Profiltiefe 15 des Laufstreifens anzeigt.

Der Piezoaktuator 1 ist gegenüberliegend von einem Profilblock 4 angeordnet. Der Piezoaktuator sendet Ultraschallwellen 5 in Form von Wellenpaketen aus.

Diese Ultraschallwellen werden durch unterschiedliche Reifenbauteile geleitet, wie beispielsweise den Reifengürtel 12, das Cap-Reifenbauteil 13 und das Base-Reifenbauteil 14.

Anschließend wird ein Teil der Ultraschallwellen an der Profilblockoberseite 7 reflektiert. Die reflektierten Schallwellen 6 werden ebenfalls in Form von Wellenpaketen in Richtung des Piezoaktuators zurückgesendet.

Der Piezoaktuator 1 weist ebenfalls einen Ultraschallempfänger auf, der die reflektierten Ultraschallwellen 6 empfängt.

Über eine entsprechende Laufzeitmessung lässt sich nachfolgend die Profiltiefe bzw. Profilhöhe des Profilblockes 4 berechnen.

Mit zunehmendem Profilabrieb bzw. abnehmender Profiltiefe 15 verkleinert sich ebenfalls die Laufzeit der reflektierten Ultraschallwellen.

Der Piezoaktuator 1 ist mit einem Reifenmodul 8 gekoppelt.

Mit dem Reifenmodul 8 erfolgt die Steuerung und Regelung des Piezoaktuators 1.

Außerdem werden mit dem Reifenmodul 8 die Messdaten vom Piezoaktuator an eine zentrale Einheit im Fahrzeug übermittelt.

Das Reifenmodul hat im Normalfall die Aufgabe mit entsprechenden Sensoren den Reifendruck des Fahrzeugreifens zu erfassen und zu überwachen.

### Bezugszeichenliste

1 Ultraschall-Vorrichtung, insb. Piezoaktuator
2 Radiale Richtung des Fahrzeugreifens
3 Axiale Richtung des Fahrzeugreifens
4 Profilklotz bzw. Profilblock
5 Gesendete Ultraschallwellen
6 Reflektierte Ultraschallwellen
7 Profilblockoberfläche
8 Reifenmodul
9 Laufstreifen
10 Umfangsrille
11 Reifeninnenseite
12 Reifengürtel
13 Cap-Reifenbauteil
14 Base-Reifenbauteil
15 Profiltiefe

## Patentansprüche

1. Fahrzeugreifen mit einem Laufstreifen (9) mit Profilblöcken (4), einer Karkasslage, einem Reifengürtel (12), einer Reifeninnenseite (11) und Seitenwänden,
wobei im Fahrzeugreifen ein Reifensensor zur Messung einer Profiltiefe (15) angeordnet ist,
auf der zum Laufstreifen (9) gegenüberliegen Reifeninnenseite (11) eine Reifensensor in Form einer Ultraschall-Vorrichtung (1) angeordnet ist,
wobei mit der Ultraschall-Vorrichtung (1) eine Vielzahl von Ultraschallwellen (5) in Richtung der Profilblöcke (4) des Laufstreifens (9) gesendet werden,
wobei über eine Laufzeitmessung der reflektierten Ultraschallwellen (6) an der Grenzfläche zwischen der Umgebungsluft und der Oberfläche (7) der Profilblöcke (4) die Profiltiefe (15) des Fahrzeugreifens ermittelt wird.
**dadurch gekennzeichnet, dass**
die Ultraschallvorrichtung einen Ultraschallgeber umfasst,
wobei der Ultraschallgeber kurze Wellenpakete mit 5 bis 10 Schwingungen sendet.

2. Fahrzeugreifen nach Anspruch 1,
**dadurch gekennzeichnet, dass**
die Ultraschall-Vorrichtung (1) einen Piezoaktuator als Ultraschallgeber zum Senden von Ultraschallwellen umfasst.

3. Fahrzeugreifen nach einem der vorhergehenden Ansprüche,
**dadurch gekennzeichnet, dass**
die Ultraschall-Vorrichtung (1) einen kombinierten Ultraschallgeber und Ultraschallempfänger zum Empfangen der reflektierten Ultraschallwellen (6) umfasst.

4. Fahrzeugreifen nach einem der vorhergehenden Ansprüche,
**dadurch gekennzeichnet, dass**
der Ultraschallgeber in einem Frequenzbereich von 1 - 20 MHz sendet.

5. Fahrzeugreifen nach einem der vorhergehenden Ansprüche,
**dadurch gekennzeichnet, dass**
die Ultraschall-Vorrichtung (1) mit einem Reifenmodul (8) zur Überwachung eines Reifendruckes gekoppelt ist.

6. Fahrzeugreifen nach einem der vorhergehenden Ansprüche,
**dadurch gekennzeichnet, dass**
die Steuerung der Ultraschall-Vorrichtung (1) mit dem Reifenmodul (8) erfolgt.

7. Fahrzeugreifen nach einem der vorhergehenden Ansprüche,
**dadurch gekennzeichnet, dass**
die Weiterleitung und/oder Auswertung der Messdaten der Ultraschall-Vorrichtung (1) mit dem Reifenmodul (8) und über eine Funkverbindung zu einer zentralen Einheit in einem Fahrzeug erfolgt.

8. Fahrzeugreifen nach einem der vorhergehenden Ansprüche,
**dadurch gekennzeichnet, dass**
auf der Reifeninnenseite (11) eine Vielzahl von Ultraschall-Vorrichtungen (1) an unterschiedlichen Positionen unterhalb des Laufstreifens (9) angeordnet sind.

9. Fahrzeugreifen nach einem der vorhergehenden Ansprüche,
**dadurch gekennzeichnet, dass**
die Ultraschall-Vorrichtungen (1) bei einem Neureifen eine Kalibrierung durchführt, um nachfolgend die relative Profiltiefe (15) des Fahrzeugreifens erfassen zu können.

## Claims

1. Vehicle tyre having a tread (9) with profile blocks (4), a carcass ply, a tyre belt (12), a tyre inner side (11) and sidewalls,
wherein a tyre sensor for measuring a profile depth (15) is arranged in the vehicle tyre,
a tyre sensor in the form of an ultrasonic device (1) is arranged on the tyre inner side (11) opposite the tread (9),
wherein a multiplicity of ultrasonic waves (5) are sent in the direction of the profile blocks (4) of the tread (9) by the ultrasonic device (1),
wherein the profile depth (15) of the vehicle tyre is determined by way of a transit time measurement of the reflected ultrasonic waves (6) at the boundary surface between the ambient air and the surface (7) of the profile blocks (4),
**characterized in that**
the ultrasonic device comprises an ultrasonic transmitter,
wherein the ultrasonic transmitter sends short wave packets with 5 to 10 oscillations.

2. Vehicle tyre according to Claim 1,
**characterized in that**
the ultrasonic device (1) comprises a piezo actuator as an ultrasonic transmitter for sending ultrasonic waves.

3. Vehicle tyre according to one of the preceding claims,
**characterized in that**
the ultrasonic device (1) comprises a combined ultrasonic transmitter and ultrasonic receiver for receiving the reflected ultrasonic waves (6).

4. Vehicle tyre according to one of the preceding claims,
**characterized in that**
the ultrasonic transmitter sends in a frequency range of 1 - 20 MHz.

5. Vehicle tyre according to one of the preceding claims,
**characterized in that**
the ultrasonic device (1) is coupled to a tyre module (8) for monitoring a tyre pressure.

6. Vehicle tyre according to one of the preceding claims,
**characterized in that**
the control of the ultrasonic device (1) is performed by the tyre module (8).

7. Vehicle tyre according to one of the preceding claims,
**characterized in that**
the onward transmission and/or evaluation of the measurement data of the ultrasonic device (1) is performed by the tyre module (8) and by way of a radio link to a central unit in a vehicle.

8. Vehicle tyre according to one of the preceding claims,
**characterized in that**
a multiplicity of ultrasonic devices (1) are arranged on the tyre inner side (11) at different positions under the tread (9).

9. Vehicle tyre according to one of the preceding claims,
**characterized in that**
on a new tyre, the ultrasonic devices (1) carry out a calibration in order to be able subsequently to detect the relative profile depth (15) of the vehicle tyre.

## Revendications

1. Pneumatique de véhicule comprenant une bande de roulement (9) pourvue de blocs de sculpture (4), un pli de carcasse, une ceinture de pneumatique (12), un côté de pneumatique intérieur (11) et des flancs,
un capteur de pneumatique destiné à mesurer une profondeur de sculpture (15) étant disposé dans le pneumatique de véhicule,
un capteur de pneumatique se présentant sous la forme d'un dispositif à ultrasons (1) étant disposé sur le côté de pneumatique intérieur (11) opposé à la bande de roulement (9),
le dispositif à ultrasons (1) envoyant un grand nombre d'ondes ultrasonores (5) en direction des blocs de sculpture (4) de la bande de roulement (9),
la profondeur de sculpture (15) du pneumatique de véhicule étant déterminée par mesure du temps de propagation des ondes ultrasonores réfléchies (6) à l'interface entre l'air ambiant et la surface (7) des blocs de sculpture (4), **caractérisé en ce que**
le dispositif à ultrasons comprend un transducteur à ultrasons,
le transducteur à ultrasons émettant des paquets d'ondes courtes comprenant 5 à 10 oscillations.

2. Pneumatique de véhicule selon la revendication 1,
**caractérisé en ce que**
le dispositif à ultrasons (1) comprend un actionneur piézoélectrique comme générateur d'ultrasons destiné à émettre des ondes ultrasonores.

3. Pneumatique de véhicule selon l'une des revendications précédentes,
**caractérisé en ce que**
le dispositif à ultrasons (1) comprend un ensemble combiné formé d'un transducteur à ultrasons et d'un récepteur à ultrasons destiné à recevoir les ondes ultrasonores réfléchies (6).

4. Pneumatique de véhicule selon l'une des revendications précédentes,
**caractérisé en ce que**
le transducteur à ultrasons émet dans une gamme de fréquences de 1 à 20 MHz.

5. Pneumatique de véhicule selon l'une des revendications précédentes,
**caractérisé en ce que**
le dispositif à ultrasons (1) est couplé à un module de pneumatique (8) destiné à surveiller une pression de pneumatique.

6. Pneumatique de véhicule selon l'une des revendications précédentes,
**caractérisé en ce que**
le dispositif à ultrasons (1) est commandé avec le module de pneumatique (8).

7. Pneumatique de véhicule selon l'une des revendications précédentes,
**caractérisé en ce que**
la transmission et/ou l'évaluation des données de mesure du dispositif à ultrasons (1) sont effectuées avec le module de pneumatique (8) et par le biais d'une liaison radio avec une unité centrale située dans un véhicule.

8. Pneumatique de véhicule selon l'une des revendications précédentes,
**caractérisé en ce que**
un grand nombre de dispositifs à ultrasons (1) sont disposés sur le côté de pneumatique intérieur (11) à différentes positions au-dessous de la bande de roulement (9).

9. Pneumatique de véhicule selon l'une des revendications précédentes,
**caractérisé en ce que**
les dispositifs à ultrasons (1) effectuent un étalonnage dans le cas d'un pneumatique neuf afin de pouvoir ensuite détecter la profondeur de sculpture relative (15) du pneumatique de véhicule.
